# EUROPEAN PATENT SPECIFICATION

(11) **EP 2 237 852 B1**
(45) Date of publication and mention of the grant of the patent: **20.11.2013**
(21) Application number: 08862192.5
(22) Date of filing: 17.12.2008
(51) Int. Cl.: B01D 46/06

(54) **OVAL CAGE COUPLER FOR FILTER CAGES**
OVALE KÄFIGKOPPELVORRICHTUNG FÜR FILTERKÄFIGE
COUPLEUR POUR CAGE OVALE POUR CAGES FILTRANTES

(30) Priority: 17.12.2007 US 6060
(43) Date of publication of application: 13.10.2010
(73) Proprietor: Peshina, William F., North Royalton, OH 44133 (US)
(72) Inventor: HEADLEY, J., Tyler, Winchester VA 22601 (US)
(74) Representative: Brophy, David Timothy
(86) International application number: PCT/US2008/013780
(87) International publication number: WO 2009/078991

(56) References cited:
- DD-A1- 204 400
- JP-A- 6 170 136
- US-A- 3 097 680
- US-A- 3 550 359
- US-A- 4 293 111
- US-A- 5 173 098
- US-A1- 2006 225 387
- US-B2- 6 905 529

## Description

### BACKGROUND OF THE INVENTION

It is a well known and standard practice for industry to remove particulate matter from a flowing stream of fluid by passing the fluid through a filter that entraps the particulates. More particularly, gases that contain smoke, soot and other particulates created by processes such as combustion of fossil fuels and the like, have been passed through woven or unwoven fabric filters for cleaning such gases prior to further treatment of such gases, or exhausting such gases to the atmosphere. Such filters may be referred to as "fabric filters", or "bag filters", and a plurality of such filters are used to provide "dust collectors" or "bag houses", in which hundreds, or thousands, of such filters are used for filtering huge volumes of contaminated gases.

Heretofore, tubular shaped fabric filters, i.e., filter bags, have been provided with a wire cage placed therein for maintaining the filter in an open condition for allowing gases to pass therethrough while trapping particulates on a surface thereof

In the past, it has been traditional that such filter bags, and wire cages had various designed lengths in a range of up to approximately 12 to 14 feet (about 3.5 to 4.25 meters), and a large filtering system, i.e., a bag house, might contain between 3,000 and 5,000 filter bags and related cages.

It is known in the art that the wire cages can have various cross sectional shapes such as being circular or oval, either of which has certain desirable attributes. The cage disclosed in WO 2009/042161 is circular in cross section while the particular embodiment shown herein has an oval cross section. Similar sectional wire cages, circular and oval, are shown in U.S. Patent 6,905,529 as well as in US 5,173,098.

### SUMMARY OF THE INVENTION

Modern day filter systems, i.e., bag houses containing fabric filters equipped with wire cages, are being designed for having units of filter bags and wire cages with lengths on the order of up to ten (10) meters (32+ feet) in length and having, perhaps, as many as 30,000 of such units in a single installation.

It has been deemed advisable, in accord with the present invention, that such foregoing systems include wire cages that are provided in a plurality of sections having a lesser length than a full length of 10 meters for simplifying manufacture, storage, shipping and installation of such cages, and that such sections are provided with means for connecting and/or locking the sections together during installation and for allowing easy separation of, and re-connection of, the cage sections during maintenance operations such as changing and/or repairing worn filter bags.

The present invention successfully provides for connecting together two or more sections of wire cages to provide a desired length and including means for locking and unlocking adjacent sections for forming a rigid, interlocking structure which enhances and retains true, longitudinal straightness of the assembled sections.

### BRIEF DESCRIPTION OF THE DRAWINGS

FIG. 1 is a plan view of a cage coupler for sectional wire filter cages, the coupler having a pair of parallel outwardly turned flanges extending along a length thereof.
FIG. 2 is an elevational view of the coupler shown in FIG. 1.
FIG. 3 is an end view of the coupler shown in FIG. 1.
FIG. 4 is a sectional view of the coupler taken on line 4-4 of FIG. 1 and showing an outwardly turned flange.
FIG. 5 is a sectional view of the coupler taken on line 5-5 of FIG. 1 and showing an outwardly turned flange.
FIG. 6 is plan view of a companion cage coupler for a wire filter cage having a pair of inwardly turned flanges extending along a length thereof for cooperating with the outwardly turned flanges of the cage coupler shown in FIGS. 1-5.
FIG. 7 is an elevational view of the coupler shown in FIG. 6.
FIG. 8 is an end view of the coupler shown in FIG. 6.
FIG. 9 is a sectional view of the coupler taken on line 9-9 of FIG. 6 and showing an inwardly turned flange.
FIG. 10 is a sectional view of the coupler taken on line 10-10 of FIG. 6 and showing an inwardly turned flange.
FIG. 11 is a plan view of the couplers of FIGS. 1 and 6 shown assembled together.
FIG. 12 is a fragmentary showing of two wire cage sections connected together in assembled form through use of a pair of couplers, the details of the couplers being shown in FIGS. 1-5 and 6-10.
FIG. 13 is an end view of the assembled couplers shown in FIG. 11.
FIG. 14 is a sectional view taken on line 14-14 of FIG. 11.
FIG. 15 is a sectional view taken on line 15-15 of FIG. 11.

### DESCRIPTION OF THE PREFERRED EMBODIMENT

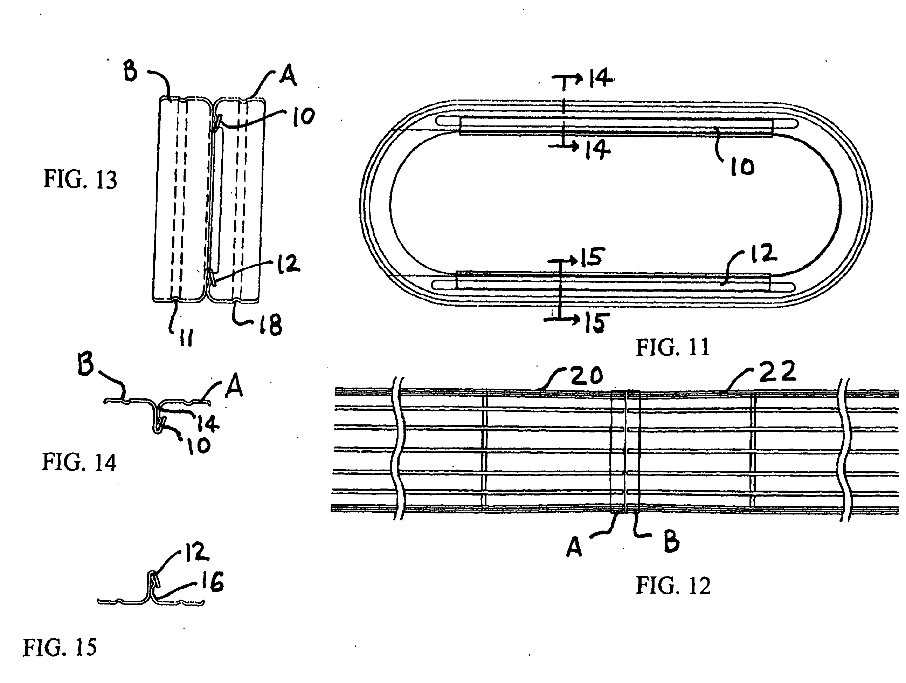

The present invention is comprised of a plurality of oval-shaped couplers, indicated by the letters "A" and "B" for connecting wire cage sections 20 and 22 together, as is shown in FIG. 12. Couplers A and B are attached at adjacent ends of cages 20 and 22 for forming an elongated cage to be inserted into a woven or non-woven, elongated, tubular filter bag (not shown) of a type well known in the prior art.

The present invention is particularly related to the coupler elements shown in the drawings on Sheets 1/3 and 2/3, and the manner of assembly shown on Sheet 3/3.

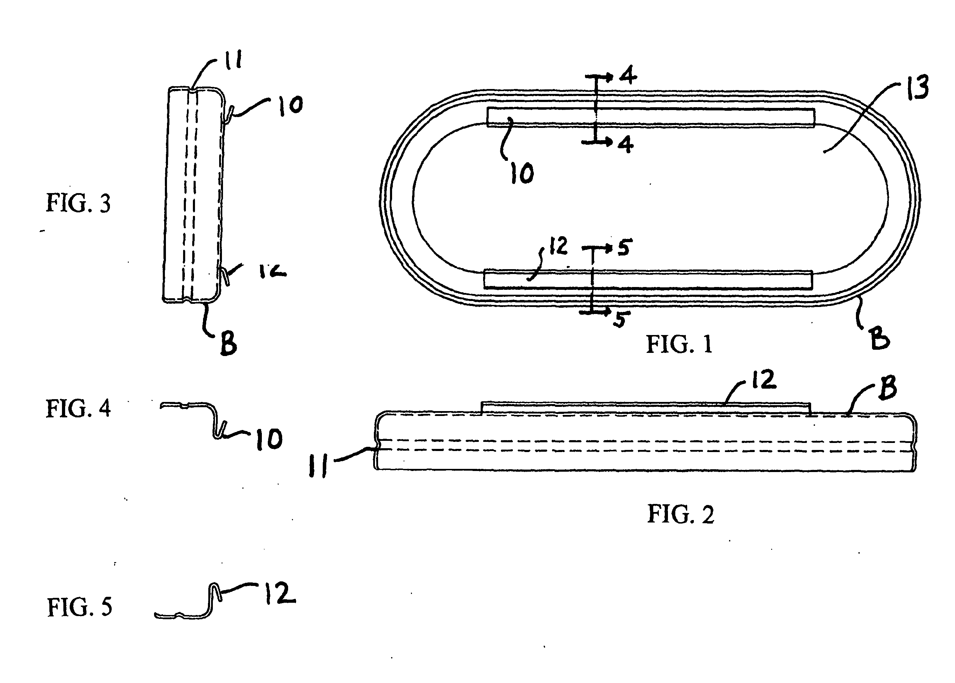

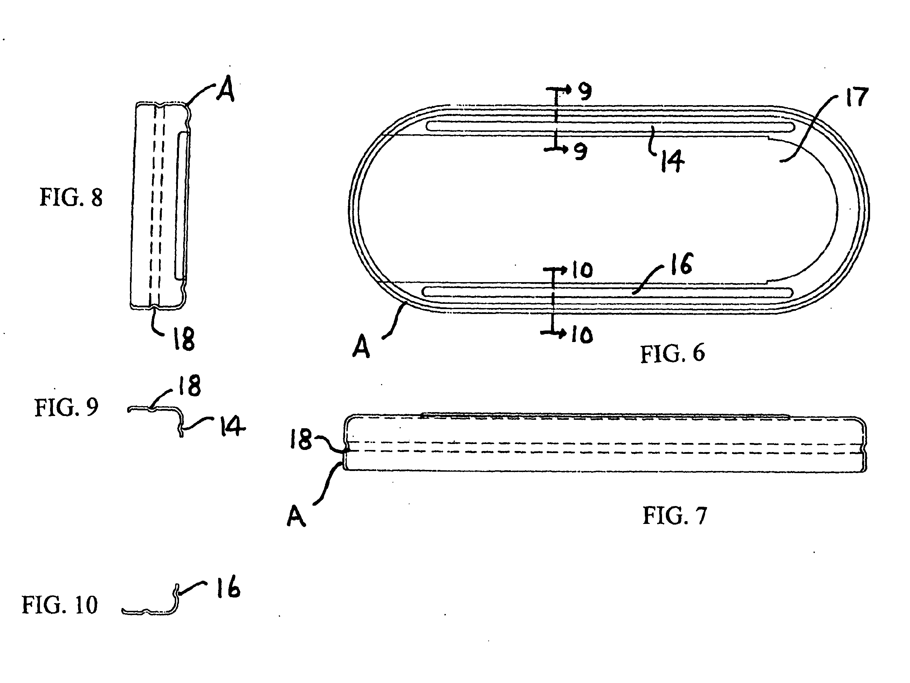

The coupler shown in FIGS. 1-5, identified by the letter "B" includes a pair of radially outwardly extending, arcuate flanges 10 and 12, and a central opening 13 for allowing passage of fluid therethrough. A circumferential groove 11 is formed in coupler B for providing beam strength thereto. The coupler shown in FIGS. 6-10 and identified by the letter "A" includes a pair of radially inwardly directed, bent flanges 14 and 16 and a central opening 17 for allowing passage of fluid therethrough. A circumferential groove 18 is formed in coupler A for providing beam strength thereto. Mating of the two couplers is shown in FIGS. 11 and 13-15 wherein flanges 10 and 12 are shown interlocking with flanges 14 and 16 after couplers A and B are joined together by sliding one longitudinally over the other. This sliding feature distinguishes the present invention over the one shown in previously referred to WO 2009/042161 wherein the two circular cages are assembled together by rotating one cage relative to the other.

FIG. 12 is a schematic showing of a pair of filter cage sections 20 and 22 being connected together in assembled form by couplers A and B. The wires of section 20 can be secured to coupler A, and the wires of section 22 can be secured to coupler B, by spot-welding.

## Claims

1. An elongated cage for supporting a fabric filter in an open position for allowing particulate laden fluids to pass there through for separating said particulate from said fluid; said elongated cage being comprised of at least a pair of cage sections including a first oval tubular cage section (20) and a second oval tubular cage section (22), **characterized by** a first coupler (A) attached to an end of said first cage section (20) and a second coupler (B) attached to an end of said second cage section (22), said first coupler and said second coupler comprising means for joining said cage sections together by sliding one coupler longitudinally over the other coupler transverse to the longitudinal axes of the cages, said first and second couplers being oval shaped, said first coupler (A) including radially inwardly directed flange means (14,16) for interfitting with outwardly directed flange means (10, 12) provided on said second coupler (B) for locking said first and second couplers together.

2. A cage as defined in claim 1, wherein said first coupler includes a plurality of longitudinally extending, parallel flange means (14, 16), and said second coupler includes a plurality of reversely bent, parallel flange means for interlocking with said inwardly directed flange means (14, 16) on said first oval coupler (A).

3. A cage as defined in claim 2 wherein said first and second oval shaped couplers each include a circumferential groove formed therein for providing beam strength thereto.

## Patentansprüche

1. Länglicher Korb zum Abstützen eines Gewebefilters in einer offenen Position, damit partikelbeladene Fluids diesen zum Trennen des Partikelmaterials von dem Fluid durchqueren können; wobei der längliche Korb aus mindestens einem Paar von Korbteilen besteht, die einen ersten ovalen röhrenförmigen Korbteil (20) und einen zweiten ovalen röhrenförmigen Korbteil (22) einschließen, **gekennzeichnet durch** einen ersten Koppler (A), der an einem Ende des ersten Korbteils (20) befestigt ist, und einen zweiten Koppler (B), der an einem Ende des zweiten Korbteils (22) befestigt ist, wobei der erste Koppler und der zweite Koppler Mittel umfassen, die zum Verbinden der Korbteile miteinander durch Schieben eines Kopplers in Längsrichtung über den anderen Koppler quer zu den Längsachsen des Korbs dienen, wobei der erste und zweite Koppler ovalförmig sind, und der erste Koppler (A) radial nach innen gerichtete Flanschmittel (14, 16) zum Ineinanderfügen mit nach außen gerichteten Flanschmitteln (10, 12) einschließt, welche an dem zweiten Koppler (B) zum Verriegeln des ersten und zweiten Kopplers aneinander vorgesehen sind.

2. Korb nach Anspruch 1, bei dem der erste Koppler eine Mehrzahl sich in Längsrichtung erstreckender, paralleler Flanschmittel (14, 16) einschließt, und der zweiten Koppler eine Mehrzahl in umgekehrter Richtung gebogener, paralleler Flanschmittel zum Ineinandergreifen mit den nach innen gerichteten Flanschmitteln (14, 16) an dem ersten ovalen Koppler (A) einschließt.

3. Korb nach Anspruch 2, bei dem der erste und zweite ovalförmige Koppler jeweils eine darin ausgebildete Umfangsnut einschließen, um denselben Durchbiegefestigkeit zu verleihen.

## Revendications

1. Cage allongée pour supporter un filtre de tissu dans une position ouverte pour permettre à des fluides chargés en particules de traverser le filtre afin de séparer lesdites particules et ledit fluide ; ladite cage allongée étant composée d'au moins une paire de sections de cage comportant une première section de cage tubulaire ovale (20) et une seconde section de cage tubulaire ovale (22), **caractérisée par** un premier coupleur (A) attaché à une extrémité de ladite première section de cage (20) et un second coupleur (B) attaché à une extrémité de ladite seconde section de cage (22), ledit premier coupleur et ledit second coupleur comprenant un moyen pour joindre lesdites sections de cage ensemble en faisant coulisser un coupleur longitudinalement sur l'autre coupleur transversalement aux axes longitudinaux des cages, lesdits premier et second coupleurs étant de forme ovale, ledit premier coupleur (A) comportant des moyens de bride dirigés radialement vers l'intérieur (14, 16) destinés à s'engager avec des moyens de bride dirigés vers l'extérieur (10,12) disposés sur ledit second coupleur (B) pour interverrouiller lesdits premier et second coupleurs.

2. Cage selon la revendication 1, dans laquelle ledit premier coupleur comporte une pluralité de moyens de bride parallèles s'étendant longitudinalement (14, 16), et ledit second coupleur comporte une pluralité de moyens de brides parallèles courbées dans le sens inverse pour interverrouiller lesdits moyens de brides dirigés vers l'intérieur (14, 16) sur ledit premier coupleur ovale (A).

3. Cage selon la revendication 2, dans laquelle lesdits premier et second coupleurs de forme ovale présentent chacun une rainure circonférentielle qui leur confère une résistance à la flexion.
